# EUROPEAN PATENT SPECIFICATION

(11) **EP 2 111 073 B1**
(45) Date of publication and mention of the grant of the patent: **13.01.2010**
(21) Application number: 07110218.0
(22) Date of filing: 13.06.2007
(51) Int. Cl.: H04W 36/02

(54) **Method and apparatus for performing a seamless handover of a mobile entity**
Verfahren und Vorrichtung zur Durchführung einer nahtlosen Weiterleitung einer mobilen Vorrichtung
Procédé et appareil pour réaliser un transfert sans interruption d'une entité mobile

(43) Date of publication of application: 21.10.2009
(73) Proprietor: NTT DoCoMo, Inc., Tokyo (JP)
(72) Inventor: Mendes, Paulo, 81673, Munich (DE); Veloso, Luis, 3400-662, Sao Giao (PT); Curado, Marilia, 3040-688, Assafarge (PT); Monteiro, Edmundo, 3040-688, Assafarge (PT)
(74) Representative: Betten & Resch

(56) References cited:
- EP-A- 1 708 425
- WO-A-2006/026635
- CHANG I-C ET AL: "SYNCHRONIZED MOBILE MULTICAST SUPPORT FOR REAL-TIME MULTIMEDIA SERVICES" IEICE TRANSACTIONS ON COMMUNICATIONS, COMMUNICATIONS SOCIETY, TOKYO, JP, vol. E87-B, no. 9, September 2004 (2004-09), pages 2585-2595, XP001209290 ISSN: 0916-8516
- BENSLIMANE A: "Real time multicast in wireless networks" LOCAL COMPUTER NETWORKS, 2000. LCN 2000. PROCEEDINGS. 25TH ANNUAL IEEE CONFERENCE ON NOVEMBER 8-10, 2000, PISCATAWAY, NJ, USA,IEEE, 8 November 2000 (2000-11-08), pages 272-280, XP010527446 ISBN: 978-0-7695-0912-9
- GOVIND KRISHNAMURTHI NOKIA RESEARCH CENTER ROBERT C CHALMERS UC SANTA BARBARA CHARLES E PERKINS NOKIA RESEARCH CENTER: "Buffer Management for Smooth Handovers in IPv6; draft-govind-seamoby-buffer6-00.txt;" IETF STANDARD-WORKING-DRAFT, INTERNET ENGINEERING TASK FORCE, IETF, CH, 13 February 2001 (2001-02-13), XP015013728 ISSN: 0000-0004

## Description

### FIELD OF INVENTION

This invention relates to a method and an apparatus for performing a seamless handover of a mobile entity.

### BACKGROUND OF THE INVENTION

The increasing portability of telecommunication devices combined with the development of wireless technologies makes possible the development of a wide range of ubiquitous services. Consequently, the success of such services requires users to have a seamless mobile experience. Furthermore, the simultaneously emergence of multi-user real time services has emphasized the importance of the multicast communication to deliver content to several simultaneous receivers. Multicast communication is the most appropriate technique to support multi-user real-time services, because it is more efficient than unicast in resource utilization when the information is sent to several simultaneous receivers. Nonetheless, multicast protocols were not developed to support seamless mobility, and consequently, mobility management is necessary to provide seamless handovers involving this type of communication. This way, multicast mobility management is a challenging and unsolved task for the successful development of next generation Mobile Networks. Namely, a solution that constraints losses during handover of Mobile Terminals/Networks, and consequently, limits the service degradation perceived by users is needed.

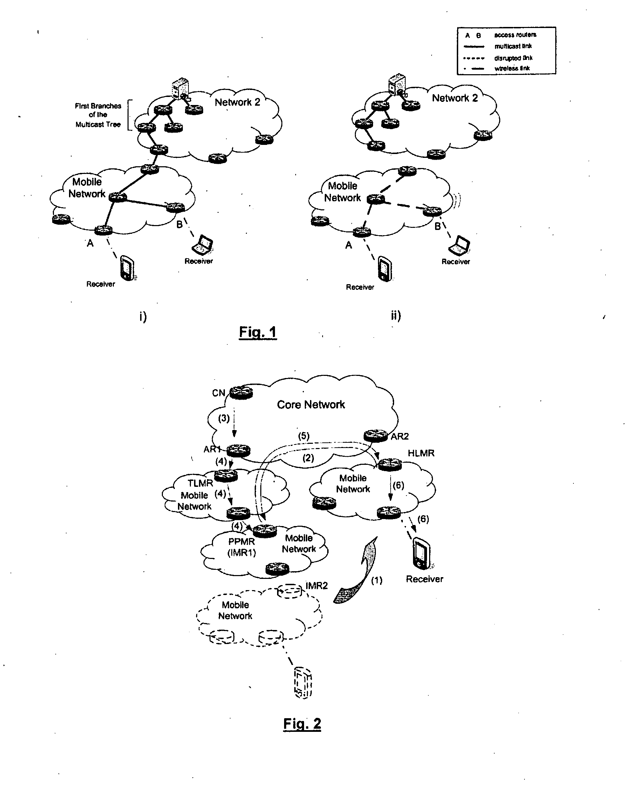

The effect of a network movement (containing multicast receivers) is illustrated in Fig. 1. Usually, this movement causes a disruption on the multicast tree, and consequently, this will lead to packet losses. The basic essence of the problem is that while the receiver's movements on a multicast delivery is already complex, the movement of the complete access network brings even more problems since it may affect different receivers of different multicast trees.

Before turning to embodiments of the invention at first some mobility approaches known from the prior art will be explained.

To allow a Mobile Node (MN) to change its points of attachment to the network without losing connectivity, the IETF has proposed the Mobile IP protocol (see e.g. C. Perkings, "RFC 3344: IPv4 Mobility Support," Internet Engineering Task Force, 2002, and D. Johnson, C. Perkins, and J. Arkko, "RFC 3775: Mobility Support for IPv6," IETF RFC 3775, June 2004. In this approach, when the Mobile Node moves to another network designated by Foreign Network (FN), it informs an entity in the Home Network (HN) denominated Home Agent (HA) about its new address called Care of Address (CoA). The *Home Address* (HoA) from its home network is maintained, and contrarily to the CoA does not depend on the Mobile Node location. A binding association is created in the HA between the HoA and the CoA for a given lifetime. The packets addressed to the Mobile Node are intercepted in the Home Network by the HA. To deliver these packets this entity establishes a tunnel with the Mobile Node or with an entity in the FN denominated Foreign Agent (FA).

To support multicast over Mobile IP networks, the IETF proposed the bi-directional tunneling approach. This proposal (also know as Home Subscription) is based on the Mobile IP architecture (see D. Johnson, C. Perkins, and J. Arkko, "RFC 3775: Mobility Support for IPv6," IETF RFC 3775, June 2004) . When the Mobile Node is in a Foreign Network and wants to subscribe to a certain multicast group, it will establish a bi-directional tunnel with the Home Agent. Through this tunnel the Mobile Node will send the membership report messages and receive the multicast data. Every time a Mobile Node moves to a new Foreign Network (FN), it continues receiving the multicast data through the HA. In other words, the multicast tree does not need to be rebuilt every time the Mobile Node moves to a different network. This way, the multicast must be supported only in the Home Network. Also, this approach allows the Mobile Node to subscribe to local Home Network multicast groups However, this scheme leads to the increase of the traffic in the Home Network, and the routing of the multicast packets will not be optimal. Besides, if several Mobile Nodes have subscribed to the same multicast group in a FN, there will be packet duplication.

In the Remote Subscription scheme (see e.g. C. Janneteau and Y. Tian, "Comparison of the Three Approaches Towards Mobile Multicast," in IST Mobile and Wireless Communications Summit, 2003), the Mobile Node follows the usual behavior of a stationary node when subscribing or leaving a multicast group. In other words, when the Mobile Node moves to a new network, it will subscribe to the multicast group through the local multicast router. This approach leads to an optimal routing and avoids the packet duplication existent in the Mobile IP based approaches. However, every time the Mobile Node moves to a new network (and no subscriber of the same group exists in this network), the multicast tree has to be readjusted causing long interruptions, and consequently, packet losses. Besides, the assumption that multicast will be supported by all the FNs is incorrect.

To support network mobility over Mobile IP networks, the IETF proposed Network Mobility (NEMO) Basic Support Protocol (see V. Devarapalli, R. Wakikawa, A. Petrescu, and P. Thubert, "RFC 3963: Network Mobility (NEMO) Basic Support Protocol." IETF, January 2005) that enables Mobile Networks to attach to different points in the Internet. In this proposal a Mobile Network can only be accessed via specific gateways called Mobile Routers that manage its movement. The Mobile Router that connects the network to the Internet runs the NEMO Basic Support Protocol with its Home Agent. The protocol is an extension of Mobile IPv6 and allows session continuity for every node in the Mobile Network as the network moves, by establishing a bi-directional tunnel between the Mobile Router and the respective Home Agent. When the Mobile Router moves away from the Home Network and attaches to a New Access Router (NAR), it acquires a new Care of Address from the Visited Network. The Mobile Router can act either as Mobile Router or as Mobile Host. The Mobile Router acts as Mobile Host for sessions it originates, providing in addition connectivity to the Mobile Network. On the other hand, if the Mobile Router seeks to act as a Mobile Router, and consequently, to provide connectivity to nodes in the Mobile Network, it indicates this to the Home Agent by setting the flag (R) in the *Binding Update* message that is sent to the Home Network. To support network mobility the Home Agent must have binding information concerning the Mobile Network prefix. This way, included in the *Binding Update* message is information regarding the Mobile Network Prefix, so that the Home Agent can forward packets meant for nodes in the Mobile Network to the Mobile Router. Alternatively, the Mobile Router and the Home Agent can run a routing protocol through the bi-directional tunnel, in which case the Mobile Router needs not to include prefix information in the *Binding Update.* The Home Agent acknowledges the *Binding Update* by sending a *Binding Acknowledgement* to the Mobile Router. A positive acknowledgement with the Mobile Router Flag (R) set means that the Home Agent has set up forwarding for the Mobile Network. Once the binding process finishes, a bi-directional tunnel is established between the Home Agent and the Mobile Router. The tunnel end points are the Care Address of the Mobile Router and the address of the Home Agent. If a packet with a source address belonging to the Network Address Prefix is received from the Mobile Network, the Mobile Router reverse-tunnels the packet to the Home Agent through this tunnel. The Home Agent decapsulates this packet and forwards it to the Correspondent Node. When a Correspondent Node sends a data packet to a node in the Mobile Network, the packet is routed to the Home Agent that currently has the binding for the Mobile Router. Then the Home Agent tunnels the packet to the current Care-of-Address of the Mobile Router. The Mobile Router decapsulates the packet and forwards it onto the interface where the Mobile Network is connected.

The NEMO protocol can also support a hierarchical structure referred as Nested Mobility, in which the Mobile Router allows another Mobile Router to attach to its Mobile Network (i.e. a Mobile Network inside another Mobile Network). However, nested Mobile Networks exhibit the so called pinball routing problem. That is, since in the NEMO basic support protocol, each Mobile Router has its own Home Agent, when a Correspondent Node sends a packet to a Node located at the bottom level of the nested Mobile Network, the packet has to visit the Home Agents of all the Mobile Routers. Several proposals try to solve the pinball routing problem.

The Route Optimization Using Tree Information Option (ROTIO) (see H. Cho, T. Kwon, and Y. Choi, "Route Optimization Using Tree Information Option for Nested Mobile Networks," IEEE Journal on Selected Areas in Communications, vol. 24, 2006) proposal tries to solve the pinball problem and to support seamless handover of Mobile Networks that are connected to another Mobile Network. In this approach, multiple MRs form a tree hierarchy in which the root MR of the nested Mobile Network is called the Top-level Mobile Router (TLMR) and the interior Mobile Routers are designated the Intermediate Routers (IMR). Additionally, when the tree topology changes two more entities are defined: the previous parent MR (PPMR) and the Handover Leader MR (HLMR). Namely, when a subnet of the nested NEMO moves, the root MR of the departing subtree is the HLMR and the MR to which the HLMR was attached is the PPMR. An example of the ROTIO functionality concerning the seamless handover of Mobile Networks is illustrated in Fig. 2. In this scenario, since IMR2 (attached to IMR1) moves to AR2 (step 1) it becomes HLMR and IMR1 becomes the PPMR.

As soon as it detects new connectivity, the HLMR sends a *Handover BU* (step 2) requesting the PPMR to reroute packets in transit to the MR's subnet towards the new CoA of the HLMR. Since the HLMR knows the topology of the network from the TLMR to the PPMR, it can perform source routing, so that its handoff BU is routed within the Mobile Network as it existed before handoff. In this case, the handoff BU will transverse AR2, the HA of the TLMR, AR1, the TLMR and the PPMR, in sequence. This way, if the CN sends a packet (step 3) before the expiration of the BU timer (normal BU, not handoff BU), the packet is routed using the existing binding information in the HA of the IMR2. The packet will arrive at the PPMR (step 4), where it is encapsulated and sent to the current location of the HLMR (step 5). The HLMR decapsulates the packet and sends it to the local node (step 6). This way, the packet losses are reduced by sending the handoff BU with the new CoA of the HLMR to the PPMR as soon as possible.

In order to solve the problem of lost packets during handover, some micro-mobility protocols are designed to temporary buffer those packets. In some approaches, packets are buffered in the Previous Access Router (PAR) and after handover, when the IP connectivity between the Mobile Node and New Access Router is established, those buffered packets are sent from the Previous Access Router to the Mobile Node. This can be used, for instance, with the pre-registration of the Low Latency Handoffs in Mobile IPv4 (LLH) (see K. E. Malki, "Internet Draft: Low Latency Handoffs in Mobile IPv4," Internet Engineering Task Force, October 2005). Other schemes buffer the packets in the New Access Router. This is the case on FMIP (see e.g. R. Koodli, "RFC 4068: Fast Handovers for Mobile IPv6," IETF RFC 4068, July 2005). However, none of these approaches avoids the starvation of the receiving application during handover and support the functioning of multi-user services.

A possible approach to support multicast over Mobile Networks is to apply the Remote Subscription proposal of a Multicast Mobile Node to the case of a Mobile Router. Contrary to the single Mobile Node that knows a priori the multicast groups of interest, the Mobile Route needs to discover which multicast groups the MNs are expecting to receive traffic from and subscribe to all of these groups (on behalf of the MNs) in the Foreign Network. The standard way for a Multicast Router to discover the multicast groups of interest for the MNs is to use Group Membership protocols (the IGMP for IPv4 and MLD for IPv6). For simple Mobile Network topologies in which the Mobile Router is directly attached to all IP subnets these Group Membership protocols are sufficient for the Mobile Router collect group membership information from the MNs within the Mobile Network. However, in more complex topologies containing routers within the Mobile Network in addition to the Mobile Router these protocols will not be enough. In this situation the idea is to use IGMP/MLD proxying (see e.g. B. Fenner, H. He, B. Haberman, and H. Sandick, "RFC 4605: IGMP/MLD-Based Multicast Forwarding ("IGMP/MLD Proxying")," IETF RFC 4605, August2006.) on the internal routers so that group membership information will propagate router by router (been aggregated at each router) towards the Mobile Router. Each internal router will work as a proxy device with a single upstream interface and one or more downstream interfaces performing IGMP/MLD-based forwarding. The proxy device maintains a database consisting of the merger of all subscriptions on any downstream interface. This way, when the proxy device receives a packet destined for a multicast group, it uses the database to forward the packet to the interfaces with interested receivers. When the Mobile Router moves to another location it will re-subscribe all the multicast sessions that were received through the Previous Access Router. With this approach the mobility of the Mobile Network will be transparent to the multicast receivers within, since the Mobile Router handles the re-subscription of the multicast sessions on his own. Nevertheless, this scheme fails to provide seamless mobility to the multi-user sessions.

As described before, existing solutions do not provide seamless mobility to multi-user sessions, particularly when receivers are attached to a moving network. These approaches do not totally avoid packet losses and the interruption of the flow during the process of handover.

EP 1 708 425 A1 discloses a method of routing multicast data packets to a mobile node. The mobile node forms part of a data transmission system comprising at least two access routers for providing data from at least one data source. The access routers are arranged to be capable of wireless communication with the mobile node. The method comprises the steps of: determining that the mobile node is to start communicating with a new access router and to stop communicating with a previous access router; reporting to the previous address router, the multicast addresses currently being received by the mobile node, together with filtering rules associated therewith; providing to the mobile node the new access router address; advising the previous access router of the address of the next access router; controlling the previous access router to initiate a handover to the new access router, the initiating including data representing the multicast addresses and associated filtering rules that the mobile node is currently using; controlling the previous access router to capture and buffer multicast packets of data which conform to the address and filtering rules; forwarding the buffered multicast packets to the new access router from the previous access router confirming connection between the new access router and the mobile node; and forwarding from the new access router to the mobile node the buffered multicast packets.

### SUMMARY OF THE INVENTION

The present invention is defined in the independent claims. The dependent claims define embodiments of the invention.

This enables the mobile entity to perform a seamless handover.

According to one embodiment said mobile entity is a mobile device or a mobile network and said buffer is at the entrance of the mobile entity; and/or
said intended receiver comprises an application running on a mobile device, and/or a node in a network receiving said session.

Mobile devices like mobile phones as well as whole networks with mobile devices connected thereto may perform a seamless handover in such a manner. The recipient of the data may thereby be an application (e.g. on a mobile phone) or a device in a network like a router or node.

According to one embodiment the method further comprises:
sending the packets which have not been received during handover by unicast to said mobile entity, said method further comprising:
   ordering possibly disordered arriving packets to deal with possibly disordered packets due to the simultaneous reception of a unicast flow from the previous access node and the multicast session flowing directly from the multicast tree.

The ordering deals with the fact that the packets arriving from two different data streams, one being the unicast encapsulated datastream from the buffer and the other being the multicast datastream from the new access node, may not be ordered correctly so that the ordering mechanism compensates for any lack of ordering.

According to one embodiment said ordering comprises one or more of the following:
ordering the arriving packets based on time stamps carried by the packets;
ordering the arriving packets based on identifiers of the packets

According to one embodiment the method further comprises:
when a handover decision is taken, requesting said first access node to store the session packets intended for said mobile entity in the buffer of said first access node;
after having disconnected said mobile entity from said first access node, continuing to deliver the packets of said session to the intended recipients through the buffer of said mobile entity;
after completion of the handover to said second access node, subscribing the multicast session at the new location and requesting the forwarding of the packets buffered in said buffer of said first access node to the buffer of said mobile entity, whereas
if the multicast session does not yet exist in said second access node a new multicast branch is created.

In this manner the seamless handover even to a new access node where the multicast session is not running can be performed.

According to one embodiment said mobile entity is connected to said first access node via one or more intermediate mobile entities such that a nested structure is formed, whereas
each access node of an intermediate mobile entity has a buffer for incoming packets and a buffer for outgoing packets, said method comprising:
storing incoming packets by the buffers of said access nodes of said intermediate mobile entities before delivering them to the intended recipients;
if a mobile entity performs a handover, requesting the buffer for outgoing packets of the access node from which the handover is to be performed to store arriving packets and to not deliver them to said mobile entity which performs the handover;
after having completed the handover to a new access node, subscribing the multicast session at the new access node and requesting the packets stored in the outgoing buffer to be forwarded to said mobile entity which performed the handover, whereas
said operations of requesting to store packets in said outgoing buffer, subscribing to said session at the new access node and requesting the packets stored in said outgoing buffer to be forwarded are performed in the same manner by each mobile entity of said nested structure which performs a handover.

In this manner even a nested structure can perform a seamless handover.

According to one embodiment said mobile entity is connected to said first access node via one or more intermediate mobile entities such that a nested structure is formed, whereas
each access node of an intermediate mobile entity has a buffer for incoming packets and said first access node has a buffer for outgoing packets, said method comprising:
storing incoming packets by the buffers of said access nodes of said intermediate mobile entities before delivering them to the intended recipients;
if a mobile entity performs a handover from said first access node or a node other than said first access node to a new access node, requesting the buffer for outgoing packets of said first access node to store arriving packets and to not deliver them further;
after having completed the handover to a new access node, subscribing the multicast session at the new access node and requesting the packets stored in the outgoing buffer of said first access node to be forwarded to said mobile entity which performed the handover, whereas
each mobile entity performing a handover is aware about its corresponding first access node being responsible for the buffering of the outgoing packets for the mobile entity in case of a handover to enable said mobile node to request said buffering to be performed in case of a handover.

In this manner an efficient handover of a nested mobile entity can be performed.

According to one embodiment there is provided a computer program comprising program code which when being executed on a computer enables said computer to carry out a method according to one of the embodiments of the invention.

### DESCRIPTION OF THE DRAWINGS

Figs. 1 and 2 illustrate a handover according to the prior art.
Figs 3 to 6 illustrate a seamless handover according to an embodiment of the invention.
Figs 7 to 10 illustrate a seamless handover according to a further embodiment of the invention.
Figs 11 to 17 illustrate a seamless handover according to a further embodiment of the invention.
Figs 18 to 21 illustrate a seamless handover according to a further embodiment of the invention.

### DETAILED DESCRIPTION

Before describing embodiments of the invention some terms used in the following description will be explained.
AR - Access Router
HMH - Handover Multicast Holder
MN - Mobile Node
SEAMNET - Seamless Mobility of terminals or Networks
SHB - Seamless Handover Buffer

In the following there will be described embodiments of a mechanism for provide seamless mobility to users of multi-user services when they move between different Access Routers or when the network where they are located moves between Access Routers. This mechanism may in the following be referred to as SEAMNET mechanism and its components as SEAMNET components because it provides Seamless Mobility of Terminals and Networks using Multi-user Services. It provides seamless mobility to users of multi-user services when they move between different Access Routers or when the network where they are located moves between Access Routers. The seamless movement according to one embodiment is achieved through the combination of buffers in the Access Routers and buffers in the moving entity. The buffers located at the Access Routers are in the following referred to as *Handover Multicast Holder (HMH)* and are responsible to store the packets that arrive during handover. The buffers located at the moving entity are denominated *Seamless Handover Buffer (SHB)* and are responsible to provide a continuous flow during the handover period.

In the mechanism according to an embodiment of the invention the session is stored in the SHB before it is delivered to the application (in a Mobile Terminal) or receivers (in a Mobile Network). When the SHB receives a multicast session for the first time it will not immediately deliver the packets but instead store a certain amount of packets and only after start to deliver them to the application / terminals. This way, when a handover occurs, leading for the session flow disruption, the application / terminals will continue to be feed through the SHB. The capability to support the continuity of the flow during handover may depend on the amount of packets initially stored, on the handover duration and on the flow rate. During the handover period the HMH stores the session packets, and consequently, these packets are not lost and are available when the terminal/network finishes the handover. At that moment, the SHB subscribes the multicast session at the new location and requests the packets not received during handover by sending a *HoldPacketsRequest* message towards the HMH. Upon the reception of this message the packets stored at the HMH are sent towards the SHB.

In a nested mobility scenario in which a mobile entity is attached to another mobile entity the approach according to one embodiment is to assume that each Access Router (in fixed and Mobile Networks) contains a HMH and each mobile entity possesses a SHB. The behavior of a mobile entity in this scenario will be analogous to the one described previously. The advantage of this approach is its simplicity. A more efficient approach is to place the HMH only in the Access Routers of the fixed network. Consequently, when a mobile entity connects to a Mobile Network it needs to know the HMH on the top of the nested hierarchy. For this reason, it is assumed that each Access Router has information concerning the associated HMH that can be obtained e.g. by performing periodic message exchanges between the Access Routers and the SHB. Just before the mobile entity movement, a message is sent towards the responsible HMH ordering for the storage of the multicast sessions subscribed by the entity. After handover the mobile entity will join the multicast sessions, and preferably simultaneously or without significant delay compared to joining the multicast sessions will send a message to the mentioned HMH requesting the packets that were stored during handover.

The mechanism according to one embodiment is supported by the following messages:
- *HoldPacketsRequest:* message sent from the SHB towards the HMH requesting the packets that were not received during handover.
- *HoldPacketsResponse:* acknowledge message sent from the HMH to the SHB.
- *HoldPacketsTrigger.* this message is used in a nested mobility scenario when the HMHs are located only in the Access Routers of the fixed network. The message is sent from the current Access Router to which the entity is connected towards the responsible HMH commanding the storage of the multicast sessions subscribed inside the Moving Network.

The mechanism according to one embodiment above contains the following interfaces and components used for seamless mobility of the terminal/network:
- Interfaces
   - Interaction with the other SEAMNET component: this allows for the recover of the missing packets from the HMH to the SHB. A request message is sent from the SHB to the HMH, and a subsequent reply together with the recovered packets is sent from the HMH to the SHB.
- Components
   - *HMH (Handover Multicast Holder):* responsible to store in the Previous Access Router the multicast sessions intended for a mobile entity (Mobile Terminal or Mobile Network) during its movement. When the mobile entity arrives to the New Access Router the packets can be delivered to the SHB, and consequently, they will not be lost during the handover period. In nested mobility, depending on the approach the HMH used by a Mobile Network can be located as usual in the Previous Access Router or it can be located at the top of the nested topology.
   - *SHB (Seamless Handover Buffer*): responsible to provide a continuous flow, when a handover occurs. SHB is located in the entrance of the mobile entity and stores the multicast sessions meant for the mobile entity (terminal or network) before deliver then to the applications (in a Mobile Terminal) or receivers (in a Mobile Network). When the SHB receives a multicast session for the first time it will not immediately deliver the packets but instead store a certain amount and only after start to deliver them to the application / terminals. This way, when a handover occurs, leading for the session flow disruption, the application / terminals will continue to be feed through the SHB. This capability to support the continuity of the flow during handover will depend on the amount of packets initially stored, on the handover duration and on the flow rate.

According to an embodiment of the invention the following advantages are achieved.
- Performs media transmission during handover period (the receiver do not perceive any interruption of the flow during handover);
- Avoids or significantly reduces the packet losses during handover;
- Allow network operators to increase the level of satisfaction of users by providing an almost continuous flow of media to the receivers.
- Introduces low communication overhead
- Avoids the pinball effect in nested networks
- Enhanced scalability and robustness comparatively to the Mobile IP based approaches. Route optimization resulting from bypassing the HA reduces the probability of failure.

The present invention is related to the invention described in the European Patent Application EP 06119464.3 titled "Method and Apparatus for Seamless Handover," filed by the same applicant as the present application and which is incorporated herein by reference. The aforementioned earlier application describes embodiments of a mechanism called SEMUD compared to the mechanism SEAMNET of the present application.

Both approaches aim to furnish seamless mobility to multicast receivers, however there are some differences between the embodiments described in both applications. One difference is that SEMUD relies on the utilization of buffers and caches, whilst the SEAMNET scheme only uses buffers. Moreover, in SEMUD approach the packets are stored in the New Access Router, while in SEAMNET approach they are stored in the Previous Access Router.

Another difference between two embodiments described in the two applications is the prediction support. The SEMUD scheme needs to know a priori the next most probable Access Router. This knowledge will permit the Previous Access Router to command the most probable Access Routers to subscribe the intended multicast session and to configure the respective cache. This process is not necessary in the SEAMNET approach.

Another difference concerns the recovering process. In the SEMUD approach according to one embodiment only one cache per session is used, from which the receivers recover the missing packets. The SEAMNET according to one embodiment uses a buffer (HMH) per moving entity, not per session.

Following, further embodiments will be described concerning the SEAMNET mechanism. First, a scenario will be described which is related to moving terminals.

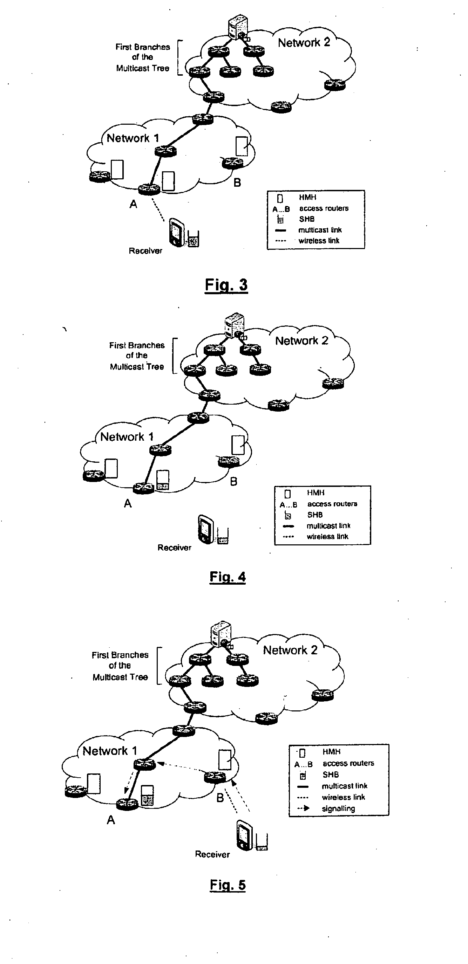

Fig. 3 illustrates a scenario in which a Mobile Terminal is connected to an Access Network. This terminal is receiving a multicast session and is moving between Access Routers. The packets from the session are primarily buffered in the SHB, and afterwards, forwarded to the application.

After the handover decision is taken, the Access Router A orders the HMH to start storing the packets meant for the Mobile Terminal. Moreover, when the terminal is moving between the two Access Routers, the application will continue to be feed through the packets stored in the SHB. This behavior is illustrated in Fig. 4.

As show in Fig. 5, the Mobile Terminal sends the *HoldPacketsRequest* message towards the HMH located in the Previous Access Router when the handover finishes. Simultaneously (or without significant delay compared to finishing the handover), it joins the multicast group in the New Access Router.

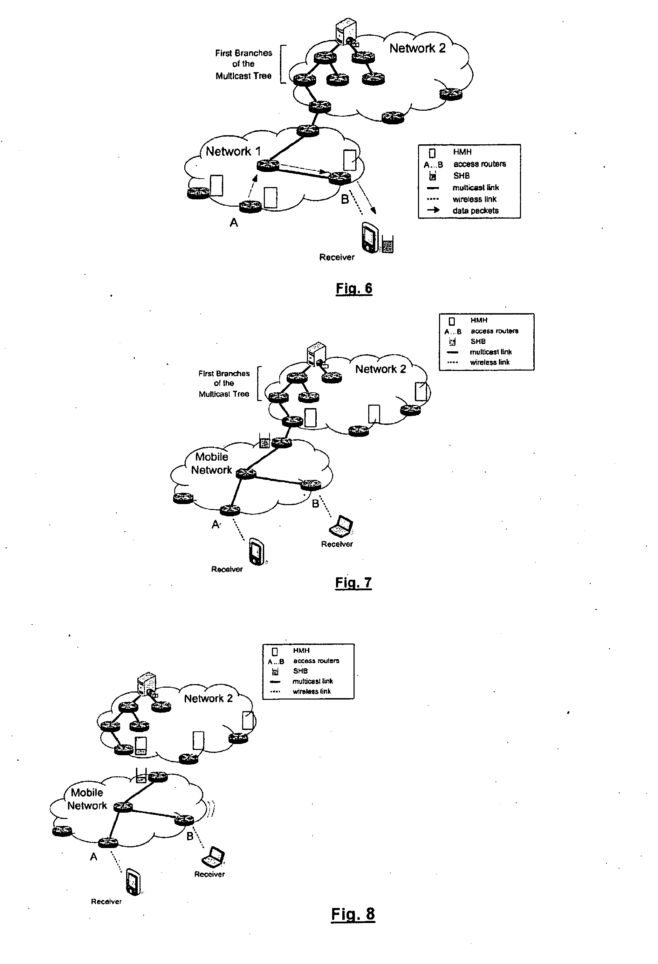

As show in Fig. 6, upon the reception of this message the stored packets are encapsulated and sent via unicast from the HMH to the SHB. At the same time (or in response to the request for joining the multicast group sent by the Mobile Terminal), a new multicast branch is created and the Mobile Terminal is once more receiving the session directly from the multicast tree.

According to one embodiment the SHB possesses an ordering mechanism (e.g. based on time stamps carried by the packets or identifiers (IDs, if they correspond to the time sequence of the packets) of the packets to deal with the possible arrival of disordered packets due to the simultaneous reception of a unicast flow from the Previous Access Router and the multicast session flowing directly from the multicast tree..

This way, packet losses are avoided and the continuity of the session is guarantied during handover. A direct consequence is the quality enhance perceived by the final user.

In the following there will be described an embodiment which is directed to a scenario containing a Mobile Network (i.e. a network segment that can move and attach to arbitrary points in the routing infrastructure). Fig. 7 illustrates this scenario with a Mobile Network connected to an Access Router. In this Mobile Network two receivers are receiving the same multicast session. The packets of the session are primarily buffered in the SHB, and afterwards, forwarded to the interfaces that possess active receivers.

After the handover decision is taken the HMH associated with the current Access Router is ordered to store the session packets intended for the Mobile Network. When performing the handover the Mobile Network will disconnect from the current Access Router, and consequently, the session flow to the network will stop. However, inside the Mobile Network the packets will continue to be delivered from the SHB to the interested receivers. Naturally, the continuity of the flow will depend on the amount of packets stored in the SHB (buffer size), on the handover time and on the flow rate. As illustrated in Fig. 8, during the handover period, the session packets are stored in the HMH (which is located at the entry point of the mobile network where the session arrives), and consequently, they are not lost during the movement of the network.

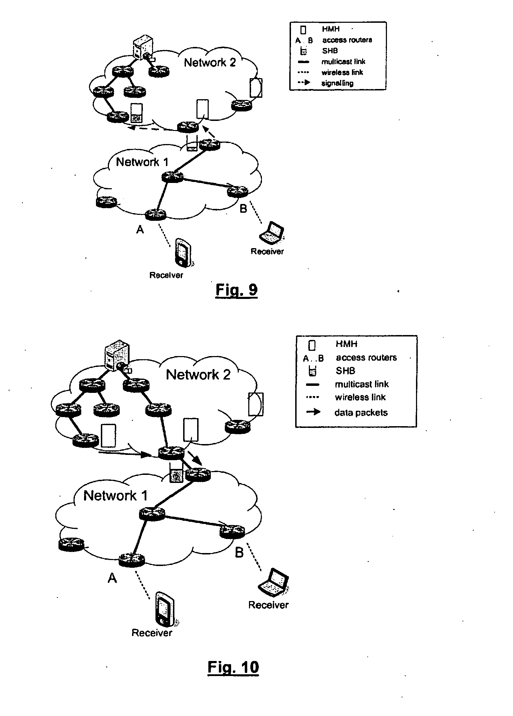

As show in Fig. 9, when the Mobile Network finishes handover and connects to the New Access Router, the SHB subscribes the multicast session at the new location and sends the *HoldPacketsRequest* message towards the HMH.

The reception of this message triggers the forward of the packets that were stored in the HMH during the handover towards the SHB. Simultaneously (or without significant delay thereto), a multicast branch is created and the session flows once more directly to the network (as illustrated in Fig. 10).

In the following there will be described an embodiment which is directed to a scenario in which a Mobile Network attaches to another Mobile Network. The described solutions do not place any restriction on the number of levels for nested mobility.

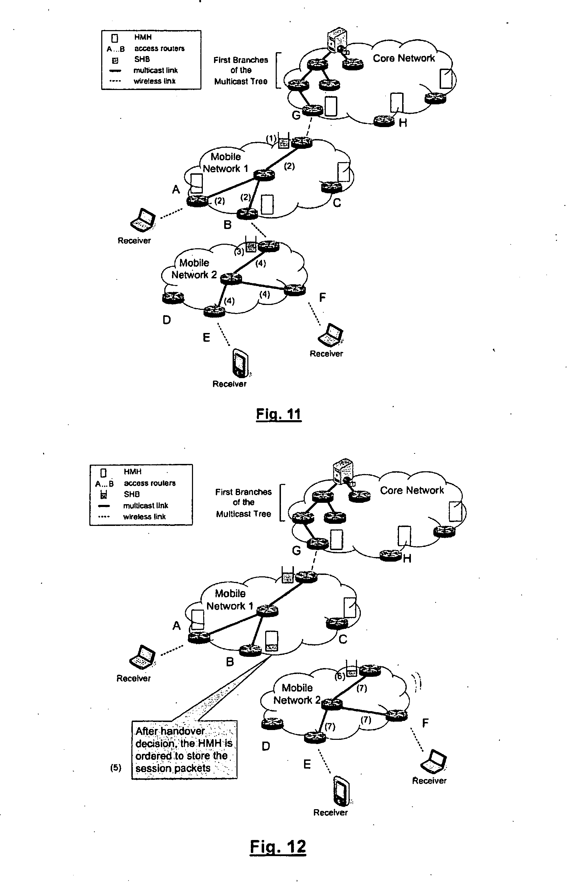

According to one embodiment in this scenario each Access Router contains a HMH and each mobile entity has a SHB. Fig. 11 shows a scenario with two Mobile Networks in which Mobile Network 1 is attached to the fixed network and Mobile Network 2 is attached to Mobile Network 1. Since the mobile entities in this scenario are networks, the associated SHBs (step 1 and 3 in Fig. 11) will store the packets from the subscribed sessions before delivering them to the interested receivers (step 2 and 4 in Fig. 11).

After the handover decision of the Mobile Network 2 the HMH associated with the Access Router B is ordered to store the session packets destined to Mobile Network 2 (step 5 in Fig. 12). During handover the SHB associated with the Mobile Network 2 (step 6 in Fig. 12) continues to deliver the buffered packets to the multicast tree, avoiding in this way the flow disruption (step 7 in Fig. 12).

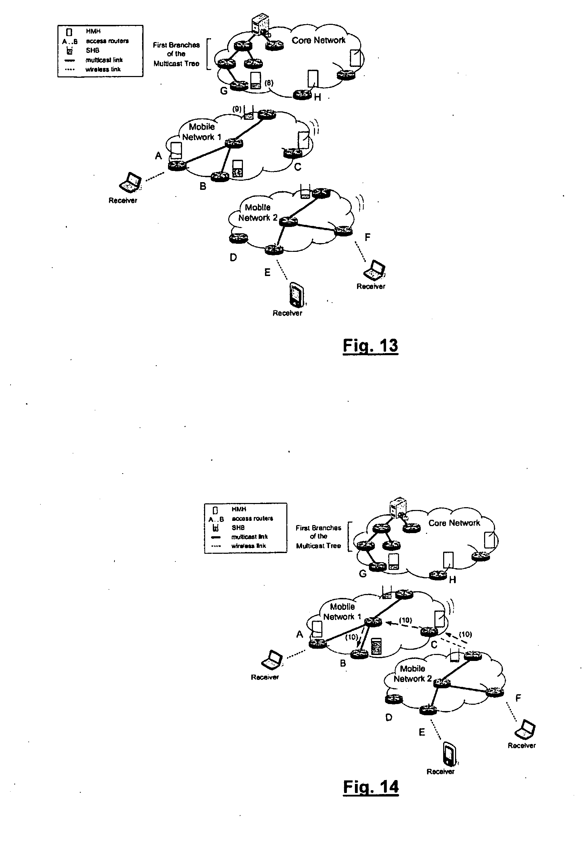

While the Mobile Network 2 is performing a handover, the Mobile Network 1 that is attached to the fixed network also enters in handover. Similarly to the process described before, the HMH associated with the Access Router G (step 8 in Fig. 13) will store the packets meant for the Mobile Network 1 (including those for the Mobile Network 2). Also, the respective SHB will continue to deliver the buffered packets to the Mobile Network 1 (step 9 in Fig. 13).

After the arrival of the Mobile Network 2 to the Access Router C the message *HoldPacketsRequest* is sent towards the Previous Access Router (step 10 in Fig. 14) requesting the packets not received during handover by the SHB of the Mobile Network 2.

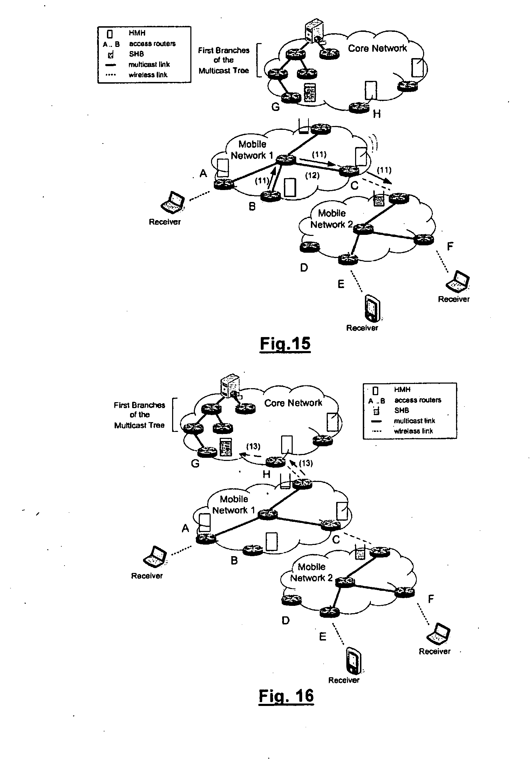

Meanwhile the HMH associated with the Access Router G continues the storage of the packets intended for the Mobile Network 1 and 2 and the SHB associated with the Mobile Network 1 will continue to maintain the session flow by sending the buffered packets. The reception of the message *HoldPacketsRequest* will trigger the sending of the *HoldPacketsResponse* message and the requested packets towards the SHB associated with the Mobile Network 2 (steps 11 in Fig. 15). Simultaneously (or without significant delay), a new branch of the multicast tree is created towards the Access Router C to which the Mobile Network 2 is now connected (steps 12 in Fig. 15).

In the meantime, the Mobile Network 1 arrives to the Access Router H and sends the *HoldPacketsRequest* message towards the HMH associated with the previous Access Router G (step 13 in Fig. 16).

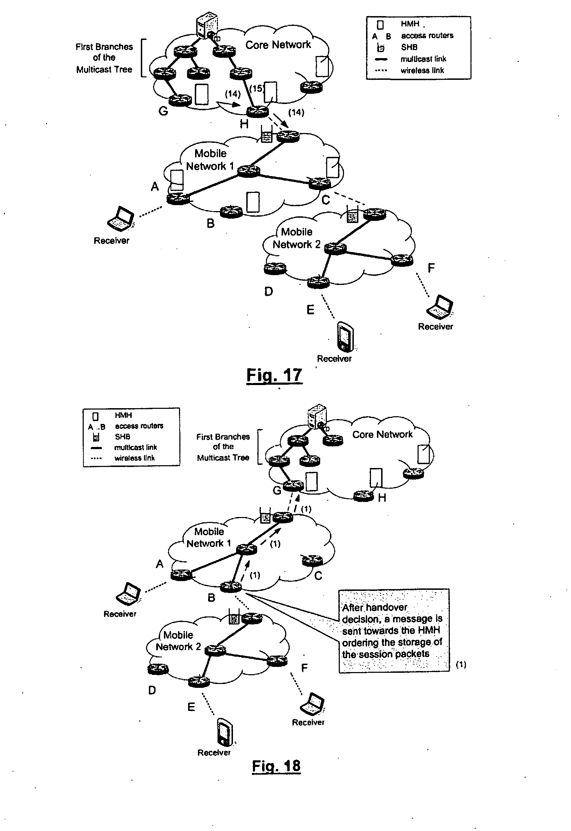

Afterwards (or without significant delay), the requested packets are sent to the SHB associated with the Mobile Network 1 (step 14 in 17) and a new multicast tree branch is created towards the Access Router H (step 15 in Fig. 17).

The advantage of this approach to nested mobility is its simplicity. In the following an embodiment which follows more efficient approach involving Mobile Networks is presented.

In this second approach it is assumed that the HMH will be located only on the Access Routers of the fixed network. This way, when an entity connects to a Mobile Network it needs to know the HMH on the top of the nested networks. For this reason, according to one embodiment each Access Router has information concerning the responsible HMH that can be - according to one embodiment - obtained by performing periodic message exchanges between the Access Routers.

One possibility would be that there is a "default rule" such that once a mobile entity (e.g. mobile network 1) connects to the "core network" the chosen access node of the core network acts as the HMH and the identifier of that access node is passed to (and stored by) the mobile node in the mobile entity (e.g. by having the mobile node hearing router advertisement messages sent by the access node in the core). The mobile node in the mobile network forwards to the access nodes of its own network the information about the identifier of the HMH in the core network. This information is stored by the access nodes. When a new moving network (e.g. mobile network 2) attaches to any of the access nodes of another mobile network which is itself attached to the core (e.g. mobile network1), the mobile node of the former will receive from the access node of the latter information about the identifier of the HMH. After this, the propagation of the information about the HMH in the core is repeated inside the new mobile network.

If the access node acting as HMH fails or is overloaded and replaced by another node, a message may be sent to the mobile entities to inform them about the new "responsible buffer" to which a buffering request in case of a handover should be directed. The identifier of the new HMH is passed by the mobile node to all access nodes in its own network by means of a periodic forwarding mechanism (e.g. coupled with the periodic behaviour of multicast protocols). The receiving access nodes will pass that information to the mobile nodes of the mobile networks that are attached to it, by means of periodic messages, such as router advertisements.

When the handover decision is taken the current Access Router sends the *HoldPackets Trigger* message towards the responsible HMH (step1 in Fig. 18) requesting the storage of the multicast sessions received in the Mobile Network 2.

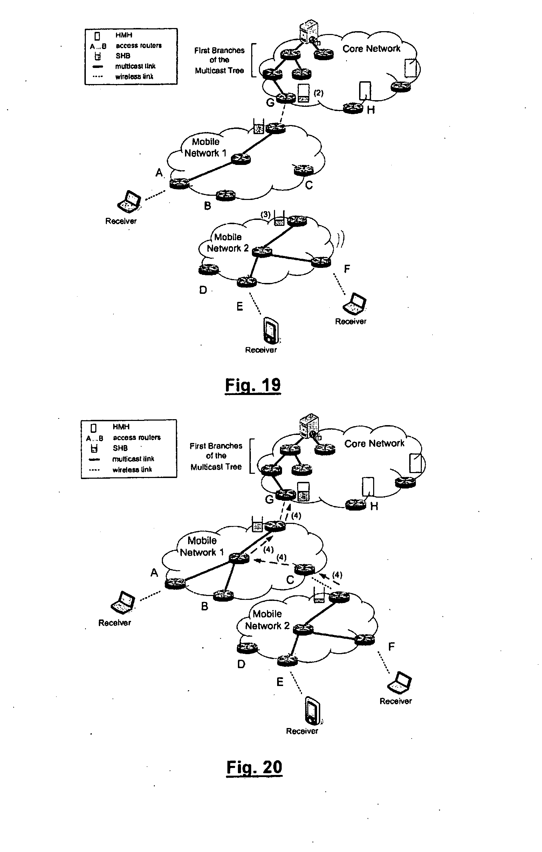

This way, during handover the HMH will store the multicast sessions (step 2 in Fig. 19) while the SHB guarantees the continuity of the flow (step 3 in Fig. 19).

When the handover finishes the SHB sends the *HoldPacketsRequest* message towards the HMH (step 4 in Fig. 20) requesting the packets that were not received during handover by the Mobile Network 2.

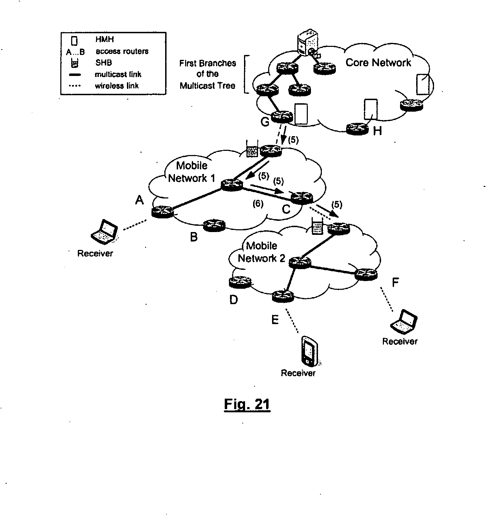

The reception of this message triggers the sending of the stored packets from the HMH towards the SHB (step 5 in Fig. 21). Simultaneously (or without significant delay), the SHB joins the multicast tree at the new location leading to the construction of a new multicast tree branch (step 6 in Fig. 21).

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a seamless handover as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the seamless handover mechanisms as described before.

## Claims

1. A method for performing a seamless handover of a mobile entity which receives data of a multicast session from a first access node to a second access node, said method comprising
storing the session data in a buffer (SHB) of said mobile entity before it is delivered to the intended receiver;
during the handover period, storing the session packets in a buffer (HMH) of the access node to which said mobile entity is connected before the handover starts, wherein in said access node there is a buffer (HMH) per mobile entity connected to said access node;
after completing said handover to said second access node, subscribing by said mobile entity the multicast session at the new location;
requesting the packets not received during handover by sending a *request* message towards said buffer of said first access node; and
upon the reception of this request message, sending the packets stored at the buffer of said first access node towards the buffer of said mobile entity,
wherein said mobile entity is a mobile device or a mobile network and said buffer storing said session data is at the entrance of said mobile entity, said method further comprising:
sending the packets which have not been received during handover by unicast via said second access node to said mobile entity, said method further comprising:
ordering possibly disordered arriving packets to deal with possibly disordered packets due to the simultaneous reception of a unicast flow from the previous access node and the multicast session flowing directly from the multicast tree,
when a handover decision is taken, requesting said first access node to store the session packets intended for said mobile entity in the buffer of said first access node;
after having disconnected said mobile entity from said first access node, continuing to deliver the packets of said session to the intended recipients through the buffer of said mobile entity;
after completion of the handover to said second access node, subscribing the multicast session at the new location and requesting the forwarding of the packets buffered in said buffer of said first access node to the buffer of said mobile entity, whereas
if the multicast session does not yet exist in said second access node a new multicast branch is created, wherein said mobile entity is connected to said first access node via one or more intermediate mobile entities such that a nested structure is formed, whereas
each access node of an intermediate mobile entity has a buffer (SHB) for incoming packets and a buffer (HMH) for outgoing packets, said method comprising:
storing incoming packets by the buffers (SHB) of said access nodes of said intermediate mobile entities before delivering them to the intended recipients;
if a mobile entity performs a handover, requesting the buffer (HMH) for outgoing packets of the access node from which the handover is to be performed to store arriving packets and to not deliver them to said mobile entity which performs the handover;
after having completed the handover to a new access node, subscribing the multicast session at the new access node and requesting the packets stored in the outgoing buffer to be forwarded to said mobile entity which performed the handover, whereas
said operations of requesting to store packets in said outgoing buffer, subscribing to said session at the new access node and requesting the packets stored in said outgoing buffer to be forwarded are performed in the same manner by each mobile entity of said nested structure which performs a handover.

2. The method of claim 1, wherein
said intended receiver comprises an application running on a mobile device, and/or a node in a network receiving said session.

3. The method of one of the preceding claims, wherein
each mobile entity performing a handover is aware about its corresponding first access node being responsible for the buffering of the outgoing packets for the mobile entity in case of a handover to enable said mobile node to request said buffering to be performed in case of a handover.

4. An apparatus for performing a seamless handover of a mobile entity which receives data of a multicast session from a first access node to a second access node, said apparatus comprising
a module for storing the session data in a buffer (SHB) of said mobile entity before it is delivered to the intended receiver;
a module for during the handover period, storing the session packets in a buffer (HMH) of the access node to which said mobile entity is connected before the handover starts, wherein in said access node there is a buffer (HMH) per mobile entity connected to said access node;
a module for after completing said handover to said second access node, subscribing by said mobile entity the multicast session at the new location;
a module for requesting the packets not received during handover by sending a *request* message towards said buffer of said first access node; and
a module for upon the reception of this request message, sending the packets stored at the buffer of said first access node towards the buffer of said mobile entity, wherein said mobile entity is a mobile device or a mobile network and said buffer storing said session data is at the entrance of said mobile entity, said apparatus further comprising:
sending the packets which have not been received during handover by unicast via said second access node to said mobile entity, said method further comprising:
a module for ordering possibly disordered arriving packets to deal with possibly disordered packets due to the simultaneous reception of a unicast flow from the previous access node and the multicast session flowing directly from the multicast tree,
when a handover decision is taken, requesting said first access node to store the session packets intended for said mobile entity in the buffer of said first access node;
a module for after having disconnected said mobile entity from said first access node, continuing to deliver the packets of said session to the intended recipients through the buffer of said mobile entity;
a module for after completion of the handover to said second access node, subscribing the multicast session at the new location and requesting the forwarding of the packets buffered in said buffer of said first access node to the buffer of said mobile entity, wherein
if the multicast session does not yet exist in said second access node a new multicast branch is created, wherein said mobile entity is connected to said first access node via one or more intermediate mobile entities such that a nested structure is formed, whereas
each access node of an intermediate mobile entity has a buffer (SHB) for incoming packets and a buffer (HMH) for outgoing packets, said apparatus comprising:
a module for storing incoming packets by the buffers (SHB) of said access nodes of said intermediate mobile entities before delivering them to the intended recipients;
if a mobile entity performs a handover, requesting the buffer (HMH) for outgoing packets of the access node from which the handover is to be performed to store arriving packets and to not deliver them to said mobile entity which performs the handover;
after having completed the handover to a new access node, subscribing the multicast session at the new access node and requesting the packets stored in the outgoing buffer to be forwarded to said mobile entity which performed the handover, whereas
said operations of requesting to store packets in said outgoing buffer, subscribing to said session at the new access node and requesting the packets stored in said outgoing buffer to be forwarded are performed in the same manner by each mobile entity of said nested structure which performs a handover.

5. The apparatus of claim 4, wherein
said intended receiver comprises an application running on a mobile device, and/or a node in a network receiving said session.

6. The apparatus of one of claims 4 to 5, whereas said mobile entity is connected to said first access node via one or more intermediate mobile entities such that a nested structure is formed, whereas
each access node of an intermediate mobile entity has a buffer for incoming packets and said first access node has a buffer for outgoing packets, said apparatus comprising:
a module for storing incoming packets by the buffers of said access nodes of said intermediate mobile entities before delivering them to the intended recipients;
a module for if a mobile entity performs a handover from said first access node or a node other than said first access node to a new access node, requesting the buffer for outgoing packets of said first access node to store arriving packets and to not deliver them further;
a module for after having completed the handover to a new access node, subscribing the multicast session at the new access node and requesting the packets stored in the outgoing buffer of said first access node to be forwarded to said mobile entity which performed the handover, whereas
each mobile entity performing a handover is aware about its corresponding first access node being responsible for the buffering of the outgoing packets for the mobile entity in case of a handover to enable said mobile node to request said buffering to be performed in case of a handover.

7. A computer program comprising program code which when being executed on a computer causes said computer to carry out a method according to one of claims 1 to 3.

## Patentansprüche

1. Verfahren zum Durchführen eines nahtlosen Handover einer mobilen Entität, die Daten einer Multicast-Session empfängt, von einem ersten Zugriffsknoten zu einem zweiten Zugriffsknoten, wobei das Verfahren aufweist:
Speichern der Sessiondaten in einem Puffer (SHB) der mobilen Entität bevor sie an den beabsichtigten Empfänger geliefert werden;
während der Handoverperiode, Speichern der Session-Pakete in einem Puffer (HMH) des Zugriffsknotens, mit dem die mobile Entität verbunden ist bevor der Handover beginnt, wobei in dem Zugriffsknoten es einen Puffer (HMH) pro mobiler Entität gibt, die mit dem Zugriffsknoten verbunden ist;
nach dem Fertigstellen des Handovers zu dem zweiten Zugriffsknoten, Subskribieren der Multicast-Session an dem neuen Ort durch die mobile Entität;
Anfordern der während des Handovers nicht empfangenen Pakete durch Senden einer *request* Nachricht an den Puffer des ersten Zugriffsknotens; und
bei Erhalt dieser request-Nachricht, Senden der Pakete, die in dem Puffer des ersten Zugriffsknotens gespeichert sind an den Puffer der mobilen Entität;
wobei die mobile Entität eine mobile Vorrichtung oder ein mobiles Netzwerk ist und der Puffer, der die Session-Daten speichert, sich am Eingang der mobilen Entität befindet, wobei das Verfahren ferner aufweist:
Senden der Pakete, die während des Handovers nicht empfangen wurden durch Unicast via dem zweiten Zugriffsknoten an die mobile Entität, wobei das Verfahren ferner aufweist:
Ordnen von möglicherweise fehlgeordneten ankommenden Paketen, um Pakete zu bearbeiten, die möglicherweise fehlgeordnet sind aufgrund des simultanen Empfangs eines Unicast-Flusses von dem vorherigen Zugriffsknoten und der Multicast-Session, die direkt von dem Multicast-Baum fließt,
wenn eine Handover-Entscheidung getroffen wird, Anfordern, dass der erste Zugriffsknoten die Session-Pakete, die für die mobile Entität vorgesehen sind, in dem Puffer des ersten Zugriffsknotens speichert;
nachdem die mobile Entität von dem ersten Zugriffsknoten diskonnektiert wurde, Fortsetzen des Lieferns der Pakete der Session an die beabsichtigten Empfänger durch den Puffer der mobilen Entität;
nach Vervollständigung des Handovers zu dem zweiten Zugriffsknoten, Subskribieren der Multicast-Session an dem neuen Ort und Anfordern des Weiterleitens der Pakete, die in dem Puffer des ersten Zugriffsknotens gepuffert sind, an den Puffer der mobilen Entität, wobei
falls die Multicast-Session nicht in dem zweiten Zugriffsknoten existiert, ein neuer Multicast-Zweig erzeugt wird, wobei
die mobile Entität mit dem ersten Zugriffsknoten über ein oder mehrere intermediäre mobile Entitäten verbunden ist, so dass eine verschachtelte Struktur gebildet wird, wobei
jeder Zugriffsknoten einer intermediären mobilen Entität einen Puffer (SHB) für ankommende Pakete und einen Puffer (HMH) für ausgehende Pakete aufweist, wobei das Verfahren aufweist:
Speichern von ankommenden Paketen durch die Puffer (SHB) des Zugriffsknotens der intermediären mobilen Entitäten, bevor sie an die beabsichtigten Empfänger geliefert werden;
falls eine mobile Entität einen Handover durchführt, Anfordern des Puffers (HMH), um für ausgehende Pakete des Zugriffsknotens, von dem der Handover durchgeführt werden soll, ankommende Pakete zu speichern und sie nicht an die mobile Entität, die den Handover durchführt, zu liefern;
nach dem Fertigstellen des Handovers an einen neuen Zugriffsknoten, Subskribieren der Multicast-Session an dem neuen Zugriffsknoten und Anfordern, dass die in dem ausgehenden Puffer gespeicherten Pakete an die mobile Entität, die den Handover durchführt, weitergeleitet werden, wobei
die Operationen des Anforderns des Speicherns von Paketen in dem ausgehenden Puffer, das Subskribieren der Session an dem neuen Zugriffsknoten und das Anfordern, dass die in dem ausgehenden Puffer gespeicherten Pakete weitergeleitet werden, auf dieselbe Weise von jeder mobilen Entität der verschachtelten Struktur, die einen Handover durchführt, durchgeführt werden.

2. Verfahren nach Anspruch 1, wobei
der beabsichtigte Empfänger eine auf einer mobilen Vorrichtung laufende Applikation und/oder einen Knoten in einem die Session empfangenden Netzwerk aufweist.

3. Verfahren nach einem der vorhergehenden Ansprüche, wobei
jede mobile Entität, die einen Handover durchführt, ihren entsprechenden ersten Zugriffsknoten kennt, der dafür verantwortlich ist, die ausgehenden Pakete für die mobile Entität, im Falle eines Handovers zu puffern, um den mobilen Knoten in die Lage zu versetzen, dass im Falle eines Handovers das Puffern durchgeführt wird.

4. Vorrichtung zum Durchführen eines nahtlosen Handovers einer mobilen Entität, die Daten einer Multicast-Session empfängt, von einem ersten Zugriffsknoten zu einem zweiten Zugriffsknoten, wobei die Vorrichtung aufweist:
Ein Modul zum Speichern der Sessiondaten in einem Puffer (SHB) der mobilen Entität bevor sie an den beabsichtigten Empfänger geliefert werden;
ein Modul zum, während der Handoverperiode, Speichern der Session-Pakete in einem Puffer (HMH) des Zugriffsknotens, mit dem die mobile Entität verbunden ist bevor der Handover beginnt, wobei in dem Zugriffsknoten es einen Puffer (HMH) pro mobiler Entität gibt, die mit dem Zugriffsknoten verbunden ist;
ein Modul zum, nach dem Fertigstellen des Handovers zu dem zweiten Zugriffsknoten, Subskribieren der Multicast-Session an dem neuen Ort durch die mobile Entität;
ein Modul zum Anfordern der während des Handovers nicht empfangenen Pakete durch Senden einer *request* Nachricht an den Puffer des ersten Zugriffsknotens; und
ein Modul zum, bei Erhalt dieser request-Nachricht, Senden der Pakete, die in dem Puffer des ersten Zugriffsknotens gespeichert sind an den Puffer der mobilen Entität;
wobei die mobile Entität eine mobile Vorrichtung oder ein mobiles Netzwerk ist und der Puffer, der die Session-Daten speichert, sich am Eingang der mobilen Entität befindet, wobei die Vorrichtung ferner aufweist:
Senden der Pakete, die während des Handovers nicht empfangen wurden durch Unicast via dem zweiten Zugriffsknoten an die mobile Entität, wobei das Verfahren ferner aufweist:
ein Modul zum Ordnen von möglicherweise fehlgeordneten ankommenden Paketen, um Pakete zu bearbeiten, die möglicherweise fehlgeordnet sind aufgrund des simultanen Empfangs eines Unicast-Flusses von dem vorherigen Zugriffsknoten und der Multicast-Session, die direkt von dem Multicast-Baum fließt,
wenn eine Handover-Entscheidung getroffen wird, Anfordern, dass der erste Zugriffsknoten die Session-Pakete, die für die mobile Entität vorgesehen sind, in dem Puffer des ersten Zugriffsknotens speichert;
ein Modul zum, nachdem die mobile Entität von dem ersten Zugriffsknoten diskonnektiert wurde, Fortsetzen des Lieferns der Pakete der Session an die beabsichtigten Empfänger durch den Puffer der mobilen Entität;
ein Modul zum, nach Vervollständigung des Handovers zu dem zweiten Zugriffsknoten, Subskribieren der Multicast-Session an dem Ort und Anfordern des Weiterleitens der Pakete, die in dem Puffer des ersten Zugriffsknotens gepuffert sind, an den Puffer der mobilen Entität, wobei
falls die Multicast-Session nicht in dem zweiten Zugriffsknoten existiert, ein neuer Multicast-Zweig erzeugt wird, wobei
die mobile Entität mit dem ersten Zugriffsknoten über ein oder mehrere intermediäre mobile Entitäten verbunden ist, so dass eine verschachtelte Struktur gebildet wird, wobei
jeder Zugriffsknoten einer intermediären mobilen Entität einen Puffer (SHB) für ankommende Pakete und einen Puffer (HMH) für ausgehende Pakete aufweist, wobei die Vorrichtung aufweist:
ein Modul zum Speichern von ankommenden Paketen durch die Puffer (SHB) des Zugriffsknotens der intermediären mobilen Entitäten, bevor sie an die beabsichtigten Empfänger geliefert werden;
falls eine mobile Entität einen Handover durchführt, Anfordern des Puffers (HMH), um für ausgehende Pakete des Zugriffsknotens, von dem der Handover durchgeführt werden soll, ankommende Pakete zu speichern und sie nicht an die mobile Entität, die den Handover durchführt, zu liefern;
nach dem Fertigstellen des Handovers an einen neuen Zugriffsknoten, Subskribieren der Multicast-Session an dem neuen Zugriffsknoten und Anfordern, dass die in dem ausgehenden Puffer gespeicherten Pakete an die mobile Entität, die den Handover durchführt, weitergeleitet werden, wobei
die Operationen des Anforderns des Speicherns von Paketen in dem ausgehenden Puffer, das Subskribieren der Session an dem neuen Zugriffsknoten und das Anfordern, das die in dem ausgehenden Puffer gespeicherten Pakete weitergeleitet werden, auf dieselbe Weise von jeder mobilen Entität der verschachtelten Struktur, die einen Handover durchführt, durchgeführt werden.

5. Vorrichtung nach Anspruch 4, wobei
der beabsichtigte Empfänger eine auf einer mobilen Vorrichtung laufende Applikation und/oder einen Knoten in einem die Session empfangenden Netzwerk aufweist.

6. Vorrichtung nach einem der Ansprüche 4 bis 5, wobei die mobile Entität mit dem ersten Zugriffsknoten über ein oder mehrere intermediäre mobile Entitäten verbunden ist, so dass eine verschachtelte Struktur gebildet wird, wobei
jeder Zugriffsknoten einer intermediären mobilen Entität einen Puffer für eingehende Pakete aufweist und der erste Zugriffsknoten einen Puffer für ausgehende Pakete aufweist, wobei die Vorrichtung aufweist:
ein Modul zum Speichern eingehender Pakete durch die Puffer der Zugriffsknoten der intermediären mobilen Entitäten, bevor sie an die beabsichtigten Empfänger geliefert werden;
ein Modul um, falls die mobile Entität einen Handover von dem ersten Zugriffsknoten oder einem anderen als dem ersten Zugriffsknoten zu einem neuen Zugriffsknoten durchführt, beim Puffer für ausgehende Pakete des ersten Zugriffsknotens anzufordern, dass die ankommenden Pakete gespeichert und nicht weiter geliefert werden;
ein Modul um, nachdem der Handover zu einem neuen Zugriffsknoten fertig gestellt wurde, die Multicast-Session an dem neuen Zugriffsknoten zu subskribieren und anzufordern, dass die Pakete, die in dem ausgehenden Puffer des ersten Zugriffsknotens gespeichert wurden, an die mobile Entität, die den Handover durchgeführt hat, weitergeleitet werden, wobei
jede mobile Entität, die einen Handover durchführt, ihren entsprechenden ersten Zugriffsknoten kennt, der verantwortlich ist für das Puffern der ausgehenden Pakete für die mobile Entität im Falle eines Handovers, um den mobilen Knoten in die Lage zu versetzen, anzufordern, dass das Puffern im Falle eines Handovers durchgeführt wird.

7. Computerprogramm aufweisend Programmcode, der wenn er auf einem Computer ausgeführt wird, den Computer veranlasst, ein Verfahren gemäß einem der Ansprüche 1 bis 3 durchzuführen.

## Revendications

1. Procédé pour réaliser un transfert sans interruption d'une entité mobile qui reçoit des données d'une session multicast d'un premier noeud d'accès à un deuxième noeud d'accès, ledit procédé comprenant les étapes consistant à :
stocker les données de session dans un tampon (SHB) de ladite entité mobile avant de les livrer au récepteur prévu ;
pendant la période de transfert, stocker les paquets de session dans un tampon (HMH) du noeud d'accès auquel ladite entité mobile est connectée avant le début du transfert, dans lequel dans ledit noeud d'accès il y a un tampon (HMH) par entité mobile connectée au dit noeud d'accès ;
après avoir terminé ledit transfert au dit noeud d'accès, souscrire par ladite entité mobile à la session multicast au nouvel emplacement ;
demander les paquets non reçus pendant le transfert en envoyant un message de demande vers ledit tampon dudit premier noeud d'accès ; et
à la réception de ce message de demande, envoyer les paquets stockés dans le tampon dudit premier noeud d'accès vers le tampon de ladite entité mobile,
dans lequel ladite entité mobile est un dispositif mobile ou un réseau mobile et ledit tampon stockant lesdites données de session est à l'entrée de ladite entité mobile,
ledit procédé comprenant en outre l'étape consistant à :
envoyer les paquets qui n'ont pas été reçus pendant le transfert par unicast par le biais dudit deuxième noeud d'accès à ladite entité mobile,
ledit procédé comprenant en outre les étapes consistant à :
ordonner les paquets arrivant éventuellement désordonnés pour gérer les paquets éventuellement désordonnés en raison de la réception simultanée d'un flux unicast du précédent noeud d'accès et de la session multicast venant directement de l'arborescence multicast,
lorsqu'une décision de transfert est prise, demander au dit premier noeud d'accès de stocker les paquets de session destinés à ladite entité mobile dans le tampon dudit premier noeud d'accès ;
après avoir déconnecté ladite entité mobile dudit premier noeud d'accès, continuer de livrer les paquets de ladite session aux destinataires prévus à travers le tampon de ladite entité mobile ;
après avoir terminé le transfert au dit deuxième noeud d'accès, souscrire à la session multicast au nouvel emplacement et demander l'envoi des paquets stockés dans ledit tampon dudit premier noeud d'accès au tampon de ladite entité mobile, dans lequel
si la session multicast n'existe pas encore dans ledit deuxième noeud d'accès, une nouvelle branche multicast est créée, dans lequel
ladite entité mobile est connectée au dit premier noeud d'accès par le biais d'une ou plusieurs entités mobiles intermédiaires de sorte qu'une structure imbriquée soit formée, dans lequel
chaque noeud d'accès d'une entité mobile intermédiaire a un tampon (SHB) pour les paquets entrants et un tampon (HMH) pour les paquets sortants,
ledit procédé comprenant les étapes consistant à :
stocker les paquets entrants dans les tampons (SHB) desdits noeuds d'accès desdites entités mobiles intermédiaires avant de les livrer aux destinataires prévus ;
si une entité mobile effectue un transfert, demander au tampon (HMH) des paquets sortants du noeud d'accès duquel le transfert doit être effectué de stocker les paquets arrivants et de ne pas les livrer à ladite entité mobile qui effectue le transfert ;
après avoir terminé le transfert à un nouveau noeud d'accès, souscrire à la session multicast au nouveau noeud d'accès et demander que les paquets stockés dans le tampon sortant soient envoyés à ladite entité mobile qui a effectué le transfert, dans lequel
lesdites étapes consistant à demander de stocker des paquets dans ledit tampon sortant, à souscrire à ladite session au nouveau noeud d'accès et à demander que les paquets stockés dans ledit tampon sortant soient envoyés sont effectuées de la même manière par chaque entité mobile de ladite structure imbriquée qui réalise un transfert.

2. Procédé selon la revendication 1, dans lequel
ledit récepteur prévu comprend une application s'exécutant sur un dispositif mobile, et/ou un noeud dans un réseau recevant ladite session.

3. Procédé selon l'une quelconque des revendications précédentes, dans lequel
chaque entité mobile effectuant un transfert connaît son premier noeud d'accès correspondant qui est responsable de mettre les paquets sortants en tampon pour l'entité mobile dans le cas d'un transfert pour permettre à ladite entité mobile de demander que ladite mise en tampon soit effectuée en cas de transfert.

4. Appareil pour réaliser un transfert sans interruption d'une entité mobile qui reçoit des données d'une session multicast d'un premier noeud d'accès à un deuxième noeud d'accès, ledit appareil comprenant :
un module pour stocker les données de session dans un tampon (SHB) de ladite entité mobile avant de les livrer au récepteur prévu ;
un module pour, pendant la période de transfert, stocker les paquets de session dans un tampon (HMH) du noeud d'accès auquel ladite entité mobile est connectée avant le début du transfert, dans lequel dans ledit noeud d'accès il y a un tampon (HMH) par entité mobile connectée au dit noeud d'accès ;
un module pour, après avoir terminé ledit transfert au dit noeud d'accès, souscrire par ladite entité mobile à la session multicast au nouvel emplacement ;
un module pour demander les paquets non reçus pendant le transfert en envoyant un message de demande vers ledit tampon dudit premier noeud d'accès ; et
un module pour, à la réception de ce message de demande, envoyer les paquets stockés dans le tampon dudit premier noeud d'accès vers le tampon de ladite entité mobile, dans lequel ladite entité mobile est un dispositif mobile ou un réseau mobile et ledit tampon stockant lesdites données de session est à l'entrée de ladite entité mobile,
ledit appareil comprenant en outre :
un module pour envoyer les paquets qui n'ont pas été reçus pendant le transfert par unicast par le biais dudit deuxième noeud d'accès à ladite entité mobile,
ledit appareil comprenant en outre :
un module pour ordonner les paquets arrivant éventuellement désordonnés pour gérer les paquets éventuellement désordonnés en raison de la réception simultanée d'un flux unicast du précédent noeud d'accès et de la session multicast venant directement de l'arborescence multicast,
un module pour, lorsqu'une décision de transfert est prise, demander au dit premier noeud d'accès de stocker les paquets de session destinés à ladite entité mobile dans le tampon dudit premier noeud d'accès ;
un module pour, après avoir déconnecté ladite entité mobile dudit premier noeud d'accès, continuer de livrer les paquets de ladite session aux destinataires prévus à travers le tampon de ladite entité mobile ;
un module pour, après avoir terminé le transfert au dit deuxième noeud d'accès, souscrire à la session multicast au nouvel emplacement et demander l'envoi des paquets stockés dans ledit tampon dudit premier noeud d'accès au tampon de ladite entité mobile, dans lequel
si la session multicast n'existe pas encore dans ledit deuxième noeud d'accès, une nouvelle branche multicast est créée, dans lequel
ladite entité mobile est connectée au dit premier noeud d'accès par le biais d'une ou plusieurs entités mobiles intermédiaires de sorte qu'une structure imbriquée soit formée, dans lequel
chaque noeud d'accès d'une entité mobile intermédiaire a un tampon (SHB) pour les paquets entrants et un tampon (HMH) pour les paquets sortants,
ledit appareil comprenant :
un module pour stocker les paquets entrants dans les tampons (SHB) desdits noeuds d'accès desdites entités mobiles intermédiaires avant de les livrer aux destinataires prévus ;
un module pour, si une entité mobile effectue un transfert, demander au tampon (HMH) des paquets sortants du noeud d'accès duquel le transfert doit être effectué de stocker les paquets arrivants et de ne pas les livrer à ladite entité mobile qui effectue le transfert ;
un module pour, après avoir terminé le transfert à un nouveau noeud d'accès, souscrire à la session multicast au nouveau noeud d'accès et demander que les paquets stockés dans le tampon sortant soient envoyés à ladite entité mobile qui a effectué le transfert, dans lequel
lesdites opérations consistant à demander de stocker des paquets dans ledit tampon sortant, à souscrire à ladite session au nouveau noeud d'accès et à demander que les paquets stockés dans ledit tampon sortant soient envoyés sont effectuées de la même manière par chaque entité mobile de ladite structure imbriquée qui réalise un transfert.

5. Appareil selon la revendication 4, dans lequel
ledit récepteur prévu comprend une application s'exécutant sur un dispositif mobile, et/ou un noeud dans un réseau recevant ladite session.

6. Appareil selon l'une quelconque des revendications 4 et 5, dans lequel ladite entité mobile est connectée au dit premier noeud d'accès par le biais d'une ou plusieurs entités mobiles intermédiaires de sorte qu'une structure imbriquée soit formée, dans lequel :
chaque noeud d'accès d'une entité mobile intermédiaire a un tampon pour des paquets entrants et ledit premier noeud d'accès a un tampon pour des paquets sortants,
ledit appareil comprenant :
un module pour stocker des paquets entrants par les tampons desdits noeuds d'accès desdites entités mobiles intermédiaires avant de les livrer aux destinataires prévus ;
un module pour, si une entité mobile réalise un transfert dudit premier noeud d'accès ou d'un noeud autre que ledit premier noeud d'accès à un nouveau noeud d'accès, demander au tampon de paquets sortants dudit premier noeud d'accès de stocker les paquets arrivants et de ne pas les livrer ;
un module pour, après avoir effectué le transfert à un nouveau noeud d'accès, souscrire à la session multicast au nouveau noeud d'accès et demander aux paquets stockés dans le tampon sortant dudit premier noeud d'accès d'être envoyés à ladite unité mobile qui a effectué le transfert, dans lequel
chaque entité mobile effectuant un transfert connaît son premier noeud d'accès correspondant qui est responsable de mettre les paquets sortants en tampon pour l'entité mobile dans le cas d'un transfert pour permettre à ladite entité mobile de demander que ladite mise en tampon soit effectuée en cas de transfert.

7. Programme informatique comprenant un code de programme qui, lorsqu'il est exécuté sur un ordinateur, amène ledit ordinateur à effectuer un procédé selon l'une quelconque des revendications 1 à 3.
